Europäisches Patentamt

European Patent Office

Office européen des brevets

(11) Veröffentlichungsnummer: **0 476 751 A2**

## EUROPÄISCHE PATENTANMELDUNG

(21) Anmeldenummer: **91202302.5**

(22) Anmeldetag: **10.09.91**

(51) Int. Cl.5: **H02P 7/00**, H02P 6/00

(30) Priorität: **15.09.90 DE 4029335**

(43) Veröffentlichungstag der Anmeldung:
**25.03.92 Patentblatt 92/13**

(84) Benannte Vertragsstaaten:
**DE FR GB**

(71) Anmelder: **Philips Patentverwaltung GmbH**
**Wendenstrasse 35 Postfach 10 51 49**
**W-2000 Hamburg 1(DE)**
(84) **DE**

(71) Anmelder: **N.V. Philips' Gloeilampenfabrieken**
**Groenewoudseweg 1**

**NL-5621 BA Eindhoven(NL)**
(84) **FR GB**

(72) Erfinder: **Austermann, Ralf**
**Johannesweg 67**
**W-4835 Rietberg 1(DE)**
Erfinder: **van der Broeck, Heinz, Dr.**
**Brüsseler Strasse 25**
**W-5352 Zülpich(DE)**

(74) Vertreter: **Peters, Carl Heinrich, Dipl.-Ing. et al**
**Philips Patentverwaltung GmbH**
**Wendenstrasse 35 Postfach 10 51 49**
**W-2000 Hamburg 1(DE)**

(54) Schaltungsanordnung zum Kommutieren eines Reluktanzmotors.

(57) Eine Schaltungsanordnung zum Kommutieren eines Reluktanzmotors mit einem Stator, der in einer ersten zyklischen Anordnung entlang einer Bewegungskoordinate für einen gegenüber dem Stator bewegbaren Rotor mit einer Anzahl Wicklungen versehen ist, in die in entsprechendem Zyklus in Abhängigkeit von Stellung und Bewegungsgeschwindigkeit des Rotors Stromimpulse von bezüglich der Bewegungskoordinate des Rotors vorgebbarer Länge und Lage einspeisbar sind, gewährleistet auch bei sehr hohen Geschwindigkeiten ein einwandfreies Kommutieren und damit ein hohes Drehmoment und geringe Verluste bei gleichzeitig einfachem Schaltungsaufbau dadurch, daß bei Bewegungsgeschwindigkeiten oberhalb eines vorgebbaren Wertes nach jedem eingespeisten Stromimpuls wenigstens der in der für niedrige Bewegungsgeschwindigkeiten vorgegebenen zyklischen Folge sich anschließende Stromimpuls ausgelassen wird.

FIG. 5

EP 0 476 751 A2

Die Erfindung bezieht sich auf eine Schaltungsanordnung zum Kommutieren eines Reluktanzmotors mit einem Stator, der in einer ersten zyklischen Anordnung entlang einer Bewegungskoordinate für einen gegenüber dem Stator bewegbaren Rotor mit einer Anzahl Wicklungen versehen ist, in die in entsprechendem Zyklus in Abhängigkeit von Stellung und Bewegungsgeschwindigkeit des Rotors Stromimpulse von bezüglich der Bewegungskoordinate des Rotors vorgebbarer Länge und Lage einspeisbar sind.

Aus der US-PS 4,739,240 ist ein Kommutator für einen auf der Grundlage eines Mikrocomputers aufgebauten, geschalteten Reluktanzantrieb bekannt, der einen Speicher, beispielsweise ein sogenanntes ROM, benutzt, um darin Statorphasen-Schaltmuster zu speichern. Dieser Kommutator ermöglicht eine ausgewählte Anpassung des Einschaltwinkels und der Impulsweite von in den Phasen geschalteten Stromimpulsen. Schaltmuster, die nur in der Impulsweite ihrer jeweiligen Impulse voneinander abweichen, können im Speicher abgelegt werden. Die Anpassung der Impulslage und -dauer soll eine Steuerung des Drehmoments des Motors in einem weiten Geschwindigkeitsbereich ermöglich.

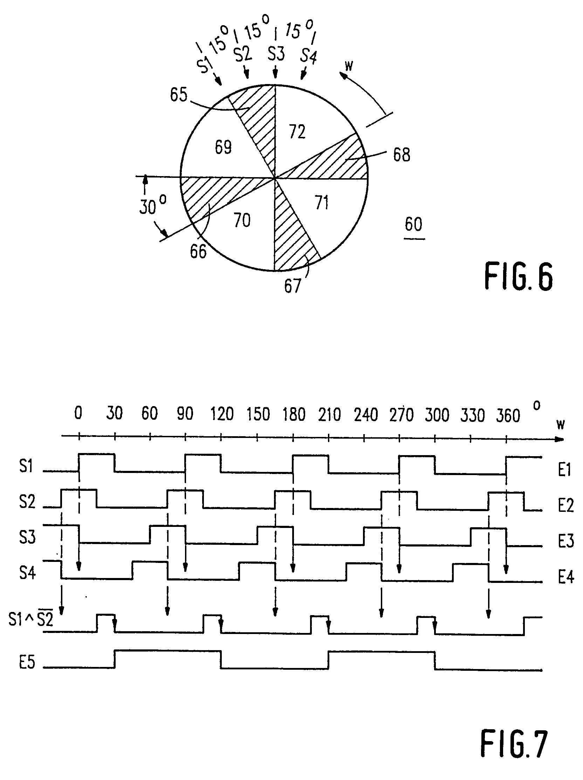

Aus dem Buch "Brushless Permanent-Magnet and Reluctance Motor Drives" von T.J.E. Miller, Clarendon Press, Oxford, 1989, Seiten 177 bis 180, insb. Fig. 7.16.(b) mit zugehöriger Beschreibung auf Seite 178, letzter Absatz, Seite 179 sowie Seite 180, 1. Absatz, ist eine Converterschaltung für einen n-phasigen Motor bekannt, der lediglich n + 1 Transistoren benötigt. Dabei wird in einem "oberen" Transistor gemeinsam für alle Phasen, d.h. Wicklungen, des Motors ein hochfrequentes "Stromzerhacken" zwecks Steuerung der Stromamplitude vorgenommen. Die "unteren" Transistoren kommutieren die zerhackte Spannung bzw. den zerhackten Strom in genau vorgegebener Reihenfolge auf die Phasen des Motors, gesteuert durch einen Sensor zur Bestimmung der Motorwellen-Position und durch eine Gatterlogik. Wie weiterhin angegeben ist, soll dieser vereinfachte Schaltkreis gegenüber einem "vollständigen" Schaltkreis mit zwei Transistoren je Phase praktisch keine Einbusse an "Funktionalität" erleiden. Jedoch wird angegeben, daß bei hohen Geschwindigkeiten die Phasen durch den vereinfachten Kommutator nicht schnell genug abgeschaltet werden können, so daß sich ein Bremsmoment ergibt, durch das die Differenz an Antriebsmoment und Bremsmoment - als Netto-Drehmoment bezeichnet - sich zu höheren Geschwindigkeiten hin sehr schnell vermindert und daß die Motorverluste zunehmen.

Es hat sich ferner gezeigt, daß auch die in der US-PS 4,739,240 beschriebenen Maßnahmen nicht geeignet sind, die vorstehend aufgeführten Nachteile bei höheren Geschwindigkeiten des Reluktanzmotors zu beheben.

Die Erfindung hat die Aufgabe, eine einfache Schaltungsanordnung zum Kommutieren eines Reluktanzmotors zu schaffen, die auch bei sehr hohen Geschwindigkeiten ein einwandfreies Kommutieren und damit ein hohes Drehmoment und geringe Verluste gewährleistet.

Die Aufgabe wird bei einer gattungsgemäßen Schaltungsanordnung dadurch gelöst, daß bei Bewegungsgeschwindigkeiten oberhalb eines vorgebbaren Wertes nach jedem eingespeisten Stromimpuls wenigstens der in der für niedrige Bewegungsgeschwindigkeiten vorgegebenen zyklischen Folge sich anschließende Stromimpuls ausgelassen wird.

Die erfindungsgemäße Schaltungsanordnung ist sowohl für den Betrieb von rotierenden als auch von linearen Motorkonfigurationen einsetzbar. Beim klassischen Rundmotor, bei dem Stator und Rotor drehsymmetrisch ausgebildet sind, sind die Wicklungen auf dem Stator in einer bestimmten Winkelteilung und Reihenfolge entlang des Umfangs und damit der Bewegungskoordinate des Rotors mit bestimmten, vorzugsweise gleichen Winkelabständen aufgebracht. Diese Reihenfolge der Wicklungen entlang der Bewegungskoordinate stellt eine erste zyklische Anordnung dar, bei der ein Zyklus durch einen Winkel von 360°, d.h. eine Umdrehung des Rotors, gebildet wird. Bei der Bewegung des Rotors wird somit diese erste zyklische Anordnung der Wicklungen nach jeder vollständigen Umdrehung des Rotors von neuem passiert bzw. durchlaufen.

Entsprechend kann aber auch ein Zyklus für einen Linearmotor derart festgelegt werden, daß er die Strecke bzw. den Teil des Stators umfaßt, auf dem in vorgegebener Reihenfolge die beschriebenen Wicklungen angeordnet sind. Ein längerer Stator wäre dann entsprechend durch Aneinanderreihung mehrerer derartiger Zyklen aufgebaut.

Bei der Bewegung des Rotors gegenüber dem Stator entlang der Bewegungskoordinate bleiben nach dem Stand der Technik die räumlichen Abstände, die der Rotor vom Beginn eines Stromimpulses zum nächsten durchläuft, konstant, wodurch sich jedoch beim Übergang zu immer höheren Drehzahlen die zugehörigen Zeitintervalle verkürzen. Da die Ein- und Ausschaltvorgänge für die Stromimpulse in den Wicklungen von deren Induktivität und den anliegenden Spannungen abhängig sind, werden die für diese Vorgänge benötigten Zeitintervalle im wesentlichen auch bei zunehmender Drehzahl unverändert bleiben, während die zeitlichen Abstände zwischen den Anfängen zweier Stromimpulse mit zunehmender Drehzahl immer kürzer werden. Beim Überschreiten eines bestimmten, durch die Bauform des jeweiligen Reluktanzmotors gegebenen Geschwindigkeitswertes unterschreitet dann der zeitliche Abstand zweier aufeinanderfolgender Stromimpulse einen Wert, unterhalb dessen eine Ausbildung der Stromimpulse mit Ein- und Ausschaltvorgängen in der benötigten Form nicht mehr möglich ist. Insbesondere beginnen aufeinanderfolgende Stromimpulse, sich zu überlappen, wodurch die eingangs beschriebenen Bremsmomente und Statorverluste auftreten.

Die Erfindung schafft nun in einfacher Weise diesem Übel dadurch Abhilfe, daß bei Bewegungsgeschwindigkeiten oberhalb eines vorgebbaren Wertes, der sich nach der Motorkonfiguration im Einzelfall bestimmen läßt, in der für niedrige Bewegungsgeschwindigkeiten vorgesehenen Reihenfolge der Stromimpulse in den einzelnen Wicklungen, d.h. in deren zyklischer Reihenfolge, bestimmte Stromimpulse ausgelassen werden, d.h. die entsprechenden Wicklungen an dieser Stelle der Bewegungskoordinate des Rotors nicht mit Strom gespeist werden. Beispielsweise kann jeder zweite Stromimpuls ausgelassen werden, auch kann nur jeder dritte Stromimpuls ausgebildet und können zwischen jeweils zwei ausgebildeten Stromimpulsen immer zwei Stromimpulse ausgelassen werden, usw.. Dadurch steht für einen einzelnen Stromimpuls bei unveränderter Zeitdauer ein größerer Abschnitt der Bewegungskoordinate zur Verfügung, ohne daß zwei aufeinanderfolgend ausgeführte Stromimpulse einander überlappen können. Dadurch ist es möglich, das schädliche Bremsmoment zu vermeiden und mit dem Rotor höhere Bewegungsgeschwindigkeiten zu erreichen.

Zusätzlich zu der Auslassung von Stromimpulsen ist es vorteilhaft, wenn die eingespeisten, d.h. die ausgeführten Stromimpulse oberhalb des vorgebbaren Wertes der Bewegungsgeschwindigkeit um einen vorgebbaren Betrag bezüglich der Bewegungskoordinate des Rotors verlängert werden und wenn außerdem ihre Endlagen bezüglich der Bewegungskoordinate unverändert bleiben. Dadurch steht für die eingespeisten Stromimpulse ein größeres Zeitintervall zur Verfügung, und es wird durch eine Begrenzung der Endlagen der Stromimpulse vermieden, daß durch ihre Verlängerung entlang der Bewegungskoordinate das besprochene Bremsmoment auftritt. Die hinreichende Zeitdauer der Stromimpulse ermöglicht dann auch bei hohen Bewegungsgeschwindigkeiten noch eine einwandfreie Geschwindigkeits- und Leistungsregelung des Reluktanzmotors.

Vorteilhaft enthält eine erfindungsgemäße Schaltungsanordnung, die zum Speisen des Reluktanzmotors aus einer Gleichspannungsquelle eingerichtet ist, je eine asymmetrische H-Schaltung für jede Wicklung des Reluktanzmotors mit einem allen H-Schaltungen gemeinsamen ersten und je H-Schaltung einem zweiten zwischen Anschlüssen der Gleichspannungsquelle angeordneten Längszweig aus je einem Schaltelement und einem dazu in Reihe angeordneten, in bezug auf die Gleichspannungsquelle in Sperrichtung gepolten Gleichrichterelement, wobei in jeder H-Schaltung das Schaltelement des einen und das Gleichrichterelement je des anderen Längszweiges einseitig mit demselben Anschluß der Gleichspannungsquelle verbunden sind und die zugehörige Wicklung im Querzweig der H-Schaltung zwischen den Verbindungspunkten der Schaltelemente und der Gleichrichterelemente jedes Längszweiges angeordnet ist.

Eine derartige Schaltungsanordnung vereinigt in sich die Vorteile eines sehr einfachen Aufbaus mit einem einfachen Betrieb auch über den Bereich sehr hoher Drehzahlen.

Eine besonders einfache Einbindung der vorstehend beschriebenen Schaltungsanordnung in eine eine Stromregelung einschließende Geschwindigkeits- bzw. Leistungsregelung wird dadurch möglich, daß die zweiten Längszweige von den zugehörigen Schaltelementen über ein gemeinsames Meßelement an den zugehörigen Anschluß der Gleichspannungsquelle geführt sind.

Ergänzend für die Offenbarung der vorstehend beschriebenen Ausgestaltungen der erfindungsgemäßen Schaltungsanordnung wird ausdrücklich Bezug genommen auf den Inhalt der DE-OS 38 19 097.

Nach einer vorteilhaften Weiterbildung umfaßt die erfindungsgemäße Schaltungsanordnung einen Positionsgeber zum Liefern eines die Stellung des Rotors entlang der Bewegungskoordinate repräsentierenden Positionssignals. Für einen besonders einfachen Aufbau der erfindungsgemäßen Schaltungsanordnung wird darüber hinaus aus den zeitlichen Änderungen des Positionssignals ein die Bewegungsgeschwindigkeit des Rotors repäsentierendes Geschwindigkeitssignal abgeleitet. Eine gesonderte Sensoranordnung zum Messen der Bewegungsgeschwindigkeit des Rotors ist dann nicht nötig.

Ein nicht nur elektrisch, sondern auch mechanisch mit besonders geringem Aufwand zu verwirklichender Aufbau wird dadurch erhalten, daß der Rotor in einer zweiten zyklischen Anordnung unterteilt ist, daß der Positionsgeber ein mit dem Rotor verbundenes, mit der zweiten zyklischen Anordnung übereinstimmend segmentiertes Bewegungskoordinatengeberelement und dazu eine Anzahl von Sensorelementen aufweist, wobei diese Anzahl der zweiten zyklischen Anordnung entspricht und die Sensorelemente längs der Bewegungskoordinate des Rotors gegenseitig voneinander um eine Längeneinheit beabstandet sind, die einen durch das kleinste gemeinsame Vielfache der ersten und zweiten zyklischen Anordnung bestimmten Teil eines vollständigen Zyklus der Statoranordnung bildet, und daß das Bewegungskoordinatengeberelement zyklisch derart ausgestaltet ist, daß es jedes der Sensorelemente über einen ersten Abschnitt von je zwei Längeneinheiten zur Abgabe eines ersten Signalwertes und über einen daran anschließenden

EP 0 476 751 A2

zweiten Abschnitt von je vier Längeneinheiten zur Abgabe eines zweiten Signalwertes veranlaßt.

An dieser Stelle sei angemerkt, daß aus der GB-PS 1,572,586 ein Antriebssystem für ein Diskettenlaufwerk bekannt ist, das mit einem bürstenlosen Gleichstrommotor ausgerüstet ist. Dieser enthält eine mit dem Rotor drehbare Kodierscheibe, die eine Spur transparenter Schlitze oder Öffnungen entlang ihres Umfangs aufweist, die eine Tachometerspur bilden. Diese Tachometerspur wird mit einer optischen Sensoreinheit abgetastet, die beim Rotieren der Kodierscheibe eine Folge von Zeitsignalen erzeugt. Diese Zeitsignale werden als Geschwindigkeitssignal in einem Geschwindigkeitssteuernetzwerk verarbeitet. Zusätzlich enthält die Kodierscheibe 36 ein Paar aneinander diametral gegenüber angeordneter, radialer Ausformungen oder "Paddel", die undurchsichtig sind und am Umfang der Kodierscheibe einen Sektor von 90° einnehmen.Diesen "Paddeln" gegenüber sind drei optische Sensoranordnungen gleichmäßig über einen Sektor der Kodierscheibe von 60° positioniert, so daß sie in einem gegenseitigen Abstand von 30° zueinander angeordnet sind. Jede dieser Sensoranordnungen erzeugt ein Ausgangssignal, wenn sich keines der beiden "Paddel" ihr gegenüber befindet. Bei einer Rotation der Kodierscheibe werden somit drei rechteckförmige Positionssignale mit einem Phasenabstand von 30° erzeugt.

Dagegen wird bei der vorgenannten Ausgestaltung der Erfindung der Positionsgeber für die Bildung sowohl des Positionssignals als auch des Geschwindigkeitssignals ausgenutzt, was zu der beschriebenen Vereinfachung führt.

Für einen besonders kostengünstigen und kompakten Aufbau, der zugleich zu einer guten Anpaßbarkeit an unterschiedliche Bauformen zu kommutierender Reluktanzmotoren beiträgt, enthält die erfindungsgemäße Schaltungsanordnung ein Steuerwerk, dem das Positionssignal sowie das Geschwindigkeitssignal zugeleitet werden und durch das danach die Stromimpulse in den Wicklungen geschaltet werden. Dabei enthält das Steuerwerk vorzugsweise eine Speicheranordnung, in der zu jedem Wert des Positionssignals und des Geschwindigkeitssignals Schaltinformationen für die Wicklungen gespeichert sind. Als derartige Speicheranordnungen können die verschiedensten Bauformen sogenannter ROMs dienen.

An dieser Stelle ist zu erwähnen, daß aus der US-PS 4,479,078 bereits ein Steuersystem für einen bürstenlosen Gleichstrommotor bekannt ist, worin ein ROM zum Steuern der kommutierten Energiezuführung zu den Wicklungen über Schalteranordnungen benutzt wird. Auch für den Reluktanzmotor und die Betriebsweise gemäß der vorliegenden Erfindung ergibt sich eine Vereinfachung und Verbilligung.

Weitere vorteilhafte Ausgestaltungen der Erfindung sind in den Unteransprüchen aufgeführt.

Eine bevorzugte Ausführungsform der Erfindung wird durch das in den Zeichnungen dargestellte Beispiel gegeben und im folgenden näher beschrieben. Es zeigen

Fig. 1 einen schematischen Querschnitt durch einen von einem Ausführungsbeispiel der erfindungsgemäßen Schaltungsanordnung zu kommutierenden Reluktanzmotor,

Fig. 2 ein Beispiel einer einfachen Umrichterschaltung zum Speisen des Reluktanzmotors nach Fig. 1 aus einer Gleichspannungsquelle,

Fig. 3 und 4 schematische Verläufe der Ströme in den Wicklungen des Reluktanzmotors nach Fig. 1 für zwei unterschiedliche Betriebsfälle,

Fig. 5 das Blockschaltbild eines Ausführungsbeispiels der erfindungsgemäßen Schaltungsanordnung,

Fig. 6 ein Schema zur Anordnung eines Positionsgebers zur Verwendung in einer erfindungsgemäßen Schaltungsanordnung und

Fig. 7 einige Signalverläufe zum Positionssignal nach Fig. 5.

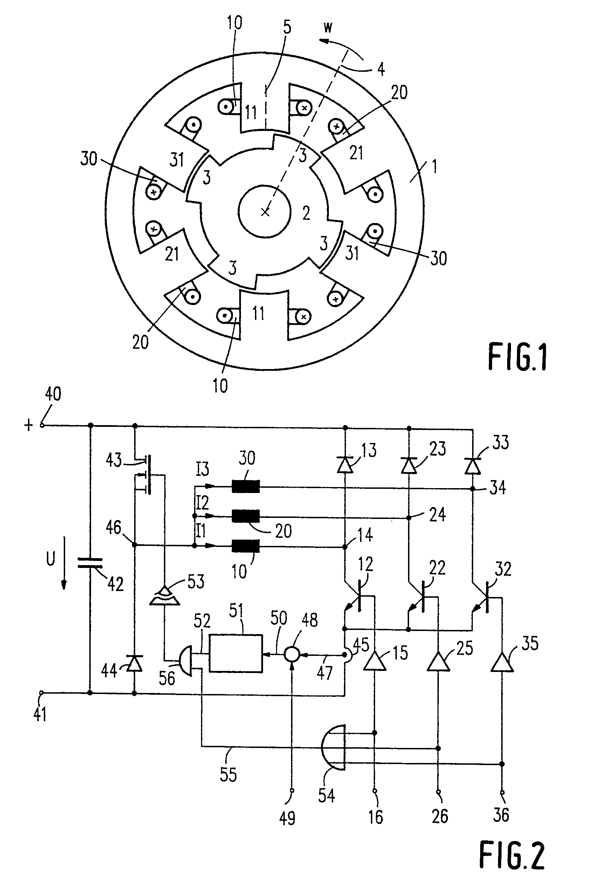

Der Reluktanzmotor gemäß Fig. 1 umfaßt einen Stator 1 mit einem darin um dessen Längsmittelachse drehend entlang einer Bewegungskoordinate w bewegbaren Rotor 2. Der Stator 1 ist mit drei Wicklungen 10, 20, 30 versehen, die entlang der Bewegungskoordinate w gleich beabstandet über dem Umfang des Stators 1 verteilt sind. Jede der Wicklungen 10, 20, 30 ist dabei in zwei Teile unterteilt, die auf zwei einander gegenüber angeordnete Polschuhe 11, 21 bzw. 31 aufgebracht sind. Die Wicklungen 10, 20, 30 bilden eine erste zyklische Anordnung entlang der Bewegungskoordinate W, wobei ein vollständiger Zyklus der Statoranordnung aus Stator 1 und Wicklungen 10, 20, 30 einer vollständigen Umdrehung, d.h. einem Winkelbereich von 360° entlang der Bewegungskoordinate w entspricht.

Der Rotor 2 ist in einer zweiten zyklischen Anordnung mit vier entlang der Bewegungskoordinate w gleich beabstandeten Polen oder Stegen 3 versehen. Auch hier wird ein vollständiger Zyklus durch einen Winkelbereich von 360° entlang der Bewegungskoordinate w gebildet.

Zum Erzeugen einer Bewegung des Rotors 2 entlang der Bewegungskoordinate w werden in die Wicklungen 10, 20, 30 in einem ihrer Anordnung im Stator 1 entsprechenden Zyklus in Abhängigkeit von der Stellung und der Bewegungsgeschwindigkeit des Rotors 2 Stromimpulse eingespeist. Die Länge dieser Stromimpulse bemißt sich nach der Bewegungskoordinate w. Im Beispiel nach Fig. 1 wird in der wiedergegebenen Stellung des Rotors 2 die erste Wicklung 10 mit Strom beaufschlagt. Die dadurch auf den Rotor ausgeübten Kräfte drehen diesen entlang der Bewegungskoordinate w bis zu einer Stellung, in der

4

die vom Mittelpunkt des Rotors 2 radial nach außen gezeichnete, gestrichelte Linie 4 mit der im oberen Polschuh 11 dargestellten, gestrichelten Linie 5 fluchtet. Bei Erreichen dieses Drehwinkels, d.h. dieses Wertes der Bewegungskoordinate w, wird der Stromimpuls in der ersten Wicklung 10 beendet und gleichzeitig ein Stromimpuls in der zweiten Wicklung 20 ausgelöst. Die dadurch am Rotor 2 angreifenden Kräfte drehen diesen in Richtung der Bewegungskoordinate w um 30° weiter, bis den Polschuhen 21 zwei Stege 3 gegenüberstehen. Dann wird der Stromimpuls in der zweiten Wicklung 20 beendet und entsprechend ein Stromimpuls in der dritten Wicklung 30 ausgelöst, durch den der Rotor 2 um weitere 30° entlangder Bewegungskoordinate w gedreht wird. In dieser Reihenfolge setzt sich das Einspeisen der Stromimpulse in die Wicklungen 10, 20 bzw. 30 fort, bis der Rotor 2 eine vollständige Umdrehung ausgeführt hat. Die Stromimpulse treten dabei in einer zyklischen Folge auf, wobei ein vollständiger Zyklus der Stromimpulse beim beispielhaften Motor gemäß Fig. 1 einer vollständigen Umdrehung des Rotors 2 entspricht.

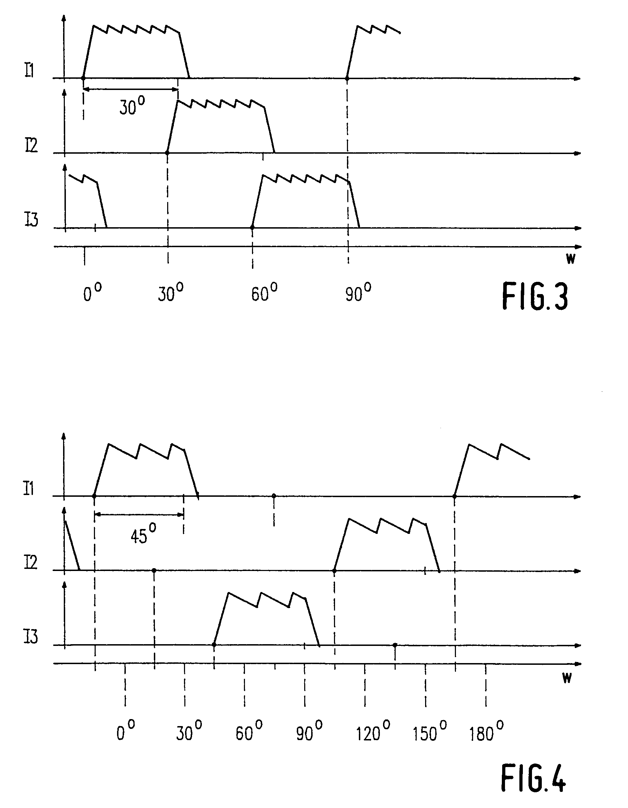

In Fig. 3 ist in vereinfachter Form eine Folge von Stromimpulsen durch die Wicklungen 10, 20, 30 dargestellt. Dabei sind mit I1, I2 und I3 die Ströme in der ersten, zweiten bzw. dritten Wicklung 10, 20 bzw. 30 bezeichnet. Im Wertebereich der Bewegungskoordinate w von Null bis zu einem Drehwinkel von 90°, der einem Viertel eines vollständigen Zyklus entspricht, folgen einander die Stromimpulse I1, I2 und I3 mit einer Länge von 30° bezüglich der Bewegungskoordinate w. An die Endlage des Stromimpulses I3 in der dritten Wicklung 30 schließt sich der nächste Stromimpuls I1 in der ersten Wicklung 10 an, usw.

Die in Fig. 3 dargestellte, zyklische Folge der Stromimpulse I1, I2, I3 in den Wicklungen 10, 20, 30 wird bei niedrigen Bewegungsgeschwindigkeiten angewendet und ist in Fig. 3 für solche dargestellt. Bei Erhöhen der Bewegungsgeschwindigkeit des Rotors 2 bleibt die Länge der Stromimpulse I1, I2, I3 entlang der Bewegungskoordinate w unverändert, die Zeitdauer der einzelnen Stromimpulse wird jedoch verringert. Da die Flanken der Stromimpulse I1, I2, I3 von den Induktivitäten des Reluktanzmotors abhängig sind und somit von der Bewegungsgeschwindigkeit des Rotors 2 wenigstens nahezu unabhängige Zeitkonstanten aufweisen, nimmt zu höheren Bewegungsgeschwindigkeiten hin der Anteil der Flanken am gesamten Stromimpuls zu. Oberhalb eines bauartbedingten Wertes der Bewegungsgeschwindigkeit ist daher die gewünschte Ausbildung der Stromimpulse I1, I2, I3 nicht mehr möglich; allenfalls müßten die Stromimpulse einen größeren Bereich entlang der Bewegungskoordinate w einnehmen. Bei der vorgegebenen zyklischen Folge der Stromimpulse I1, I2, I3 gemäß Fig. 3 führt dies oberhalb des genannten Wertes der Bewegungsgeschwindigkeit zu verminderter Leistung und hohen Stromverlusten.

Gemäß der Erfindung wird nun zur Abhilfe der aufgeführten Nachteile bei Bewegungsgeschwindigkeiten oberhalb eines vorgebbaren Wertes, der sich anhand der baulichen Gegebenheiten des Reluktanzmotors wählen läßt, nach jedem eingespeisten Stromimpuls wenigstens der sich in der zyklischen Folge für niedrige Bewegungsgeschwindigkeiten anschließende Stromimpuls ausgelassen. Vorzugsweise wird aus der zyklischen Reihenfolge der bei niedriger Bewegungsgeschwindigkeit einzuspeisenden Stromimpulse jeder zweite Impuls ausgelassen. Dieser Fall ist in Fig. 4 dargestellt. Danach wird in der zyklischen Folge der Stromimpulse I1, I2, I3 aus Fig. 3 jeder zweite Impuls ausgelassen, so daß auf den ersten, dargestellten Stromimpuls I1 als nächster Stromimpuls ein solcher in der dritten Wicklung 30 - I3 - folgt. Nach diesem eingespeisten Stromimpuls I3 wird der in der zyklischen Folge aus Fig. 3 sich anschließende Stromimpuls I1 ausgelassen und erst der nachfolgende Stromimpuls I2 wieder eingespeist, usw.

Diese Maßnahme ist in Fig. 4 darüber hinaus mit einer Verlängerung der eingespeisten Stromimpulse um einen vorgebbaren Betrag bezüglich der Bewegungskoordinate w des Rotors 2 kombiniert. In Fig. 4 sind die Stromimpulse I1, I2, I3 bei unveränderter Endlage jeweils an ihrer vorderen Flanke um 15° verlängert. Dadurch wird auch bei hohen Bewegungsgeschwindigkeiten eine hinreichende Zeitspanne für einen vollständigen Anstieg des Stromes in den einzelnen Stromimpulsen I1, I2, I3 auf den gewünschten Amplitudenwert ermöglicht, so daß eine Strom- und damit Leistungsregelung des Reluktanzmotors auch bei hohen Bewegungsgeschwindigkeiten durchführbar ist. Entsprechend beginnt in Fig. 4 der erste Stromimpuls I1 statt bei 0° bereits bei -15°, der nächste, eingespeiste Stromimpuls I3 bei 45° anstelle von 60° im Betriebsfall gemäß Fig. 3 (niedrige Bewegungsgeschwindigkeiten), usw.

Fig. 2 zeigt eine besonders einfache Schaltungsanordnung zum Speisen des Reluktanzmotors nach Fig. 1 aus einer Gleichspannungsquelle, die an zwei Speisespannungsanschlüsse 40, 41 der Schaltung angeschlossen ist und eine Gleichspannung U abgibt, die an einem mit den Speisespannungsanschlüssen 40, 41 verbundenen Glättungskondensator 42 ansteht. Daran schließt sich für jede Wicklung 10, 20, 30 des Reluktanzmotors je eine asymmetrische H-Schaltung an mit einem allen H-Schaltungen gemeinsamen ersten Längszweig aus einer Reihenschaltung eines Stromsteuertransistors 43 und einer bezüglich der Gleichspannung U in Sperrichtung gepolten Rückschlagdiode 44. Zu diesem gemeinsamen ersten Längszweig weist jede asymmetrische H-Schaltung einen zweiten Längszweig auf, der aus je einem Wahltransistor 12, 22 bzw. 32, einer damit in Reihe liegenden, in Sperrichtung bezüglich der Gleichspannung U gepolten zweiten Rückschlagdiode 13, 23 bzw. 33 sowie im Beispiel nach Fig. 2 außerdem einem allen zweiten Längszweigen gemeinsamen Meßelement 45 besteht. Der Stromsteuertransistor 43 sowie die Wahltransistoren 12, 22 bzw. 32 bilden die Schaltelemente der zugeordneten Längszweige, die Rückschlagdioden 44 bzw. 13, 23, 33 die zugehörigen Gleichrichterelemte. Dabei sind in jeder H-Schaltung das Schaltelement 43 des einen Längszweiges 43, 44 und das Gleichrichterelement 13, 23 bzw. 33 je des anderen Längszweiges 12, 13; 22, 23 bzw. 32, 33 einseitig mit demselben Speisespannungsanschluß 40, d.h. demselben Anschluß der Gleichspannungsquelle verbunden. Die zugehörige Wicklung 10, 20 bzw. 30 des Reluktanzmotors ist im Querzweig der H-Schaltung zwischen den Verbindungspunkten der Schaltelemente 43; 12, 22 bzw. 32 und der Gleichrichterelemente 44; 13, 23 bzw. 33 jedes Längszweiges angeordnet. Diese Verbindungspunkte sind mit den Bezugzeichen 46; 14, 24 bzw. 34 markiert.

Das gemeinsame Meßelement 45, über das die zweiten Längszweige 12, 13; 22, 23 bzw. 32, 33 an den Anschluß 41 der Gleichspannungsquelle geführt sind, ist als Strommeßelement zum Messen der Amplituden der Stromimpulse I1, I2 bzw. I3 ausgebildet. Der Strommeßwert wird vom Meßelement 45 über eine Meßleitung 47 einem Subtrahierer 48 zugeleitet und darin von einem über einen Stromsollwertanschluß 49 zugeführten Stromsollwert subtrahiert. Die so gebildete Differenz gelangt über einen Eingang 50 auf einen Stromregler 51, der an seinem Ausgang 52 ein Schaltsignal für den Stromsteuertransistor 43 abgibt. Durch dieses Schaltsignal, das bei Bedarf in einer Verstärkerstufe 53 zusätzlich verstärkt werden kann, wird der Stromsteuertransistor 43 hochfrequent ein- und ausgeschaltet, wobei das Tastverhältnis durch den Stromregler 51 gemäß der Regelabweichung zwischen dem Strommeßwert und dem Stromsollwert eingestellt wird.

Die Schaltung nach Fig. 2 umfaßt weiterhin zu jedem der Wahltransistoren 12, 22 bzw. 32 einen mit deren Basisanschluß verbundenen Treiberverstärker 15, 25 bzw. 35, über die den Wahltransistoren 12, 22 bzw. 32 Schaltsignale von Wahlanschlüssen 16, 26 bzw. 36 zugeleitet werden. Durch diese Schaltsignale wird durch die in der gerade eingenommenen Position des Rotors 2 entlang seiner Bewegungskoordinate w mit einem Strom zu beaufschlagende Wicklung 10, 20 bzw. 30 ausgewählt, so daß sich darin nach Maßgabe der Steuerung des Stromsteuertransistors 43 die Stromimpulse I1, I2 bzw. I3 ausbilden können. Über ein ODER-Gatter 54 wird außerdem aus den drei Schaltsignalen von den Wahlanschlüssen 16, 26, 36 auf einer Leitung 55 ein Freigabesignal gebildet, das über ein UND-Gatter 56 das Schaltsignal für den Stromsteuertransistor 43 am Ausgang 52 des Stromreglers 51 nur in den Zeitintervallen weiterzuleiten gestattet, in denen wenigstens einer der Wahltransistoren 12, 22 bzw. 32 leitend ist und in denen somit ein Stromimpuls I1, I2 bzw. I3 fließen soll.

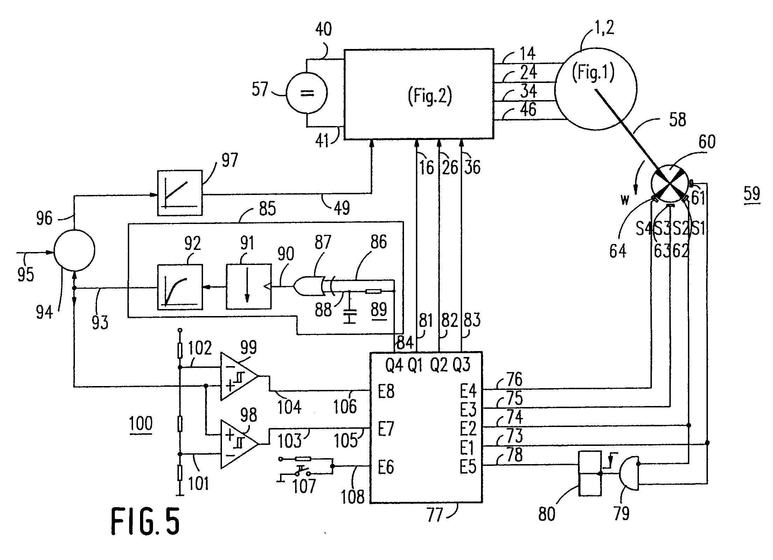

In Fig. 5 ist ein Ausführungsbeispiel einer Schaltungsanordnung blockschematisch wiedergegeben, mit der der Reluktanzmotor nach Fig. 1 in der beschriebenen, erfindungsgemäßen Weise betrieben werden kann. Der Motor mit Stator 1, Rotor 2 und Wicklungen 10, 20, 30 sowie die Umrichteranordnung gemäß Fig. 2 sind im oberen Teil der Fig. 5 angedeutet; die Anschlüsse der Schaltung aus Fig. 2 an die Gleichspannungsquelle 57 sowie die übrigen Anschlüsse und Verbindungspunkte sind mit den bereits eingeführten Bezugzeichen versehen.

Im Ausführungsbeispiel nach Fig. 5 ist der Rotor 2 des Reluktanzmotors über eine schematisch als Welle 58 angedeutete, mechanische Verbindung mit einem Positionsgeber 59 zum Liefern eines die Stellung des Rotors 2 entlang der Bewegungskoordinate w repräsentierenden Positionssignals gekoppelt. Dieser Positionsgeber 59 weist ein Bewegungskoordinatengeberelement 60 auf, das sich im Beispiel nach Fig. 5 synchron mit dem Rotor 2 bewegt. Die genaue Anordnung des Bewegungskoordinatengeberelements 60 ist aus Fig. 6 ersichtlich. Danach ist das Bewegungskoordinatengeberelement 60 übereinstimmend mit der zweiten zyklischen Anordnung, in der der Rotor 2 des Reluktanzmotors unterteilt ist, segmentiert. Um das Bewegungskoordinatengeberelement 60 sind dazu vier Sensorelemente angeordnet, deren Anzahl der zweiten zyklischen Anordnung in dem Sinne entspricht, als das sie mit der Anzahl der Unterteilungen des Rotors 2 und damit der Segmentierung des Bewegungskoordinatengeberelements 60 übereinstimmt. Im vorliegenden Beispiel entspricht die Anzahl der Sensorelemente 61 bis 64 derjenigen der Pole bzw. Stege 3 des Rotors 2. Die Sensorelemente 61 bis 64 sind längs der Bewegungskoordinate w des Rotors 2 gegenseitig voneinander um eine Längeneinheit beabstandet, die einen durch das kleinste gemeinsame Vielfache der ersten zyklischen Anordnung (des Stators 1) und der zweiten zyklischen Anordnung (des Rotors 2) bestimmten Teil eines vollständigen Zyklus der Statoranordnung bildet. Im vorliegenden Beispiel, in dem ein vollständiger Zyklus der Statoranordnung einen Bereich der Bewegungskoordinate w von 360º einschließt, besteht die erste zyklische Anordnung des Stators 1 aus einer sechsfachen Unterteilung des Winkelbereichs von 360º entsprechend den Polschuhen 11, 21, 31, während die zweite zyklische Anordnung des Rotors 2 eine vierfache Unterteilung entsprechend den vier Stegen 3 entlang des Umfangs des Rotors 2 aufweist. Die genannte Längeneinheit umfaßt dann einen Bereich von 15º entlang der Bewegungskoordinate w, die einem vierundzwanzigsten Teil des gesamten Umfangs des Stators 1 und damit des vollständigen Zyklus der Statoranordnung entsprechen.

Das Bewegungskoordinatengeberelement 60 ist, wie in Fig. 6 näher dargestellt, zyklisch derart ausgestaltet, daß es jedes der längs der Bewegungskoordinate w gegenseitig voneinander um eine Längeneinheit beabstandeten Sensorelemente über einen ersten Abschnitt 65, 66, 67 bzw. 68 von je zwei Längeneinheiten - im vorliegenden Beispiel 30º - zur Abgabe eines ersten Signalwertes und über einen daran anschließenden zweiten Abschnitt 69, 70, 71 bzw. 72 von je vier Längeneinheiten - im vorliegenden Beispiel 60º - zur Abgabe eines zweiten veranlaßt. Die Sensorelemente 61 bis 64 geben Signale ab, die mit S1 bis S4 bezeichnet sind. Die Lage der Sensorelemente 61 bis 64 gegenüber dem Bewegungskoordinatengeberelement 60 ist in Fig. 6 durch die mit den Bezeichnungen der Signale S1 bis S4 markierten Pfeile angedeutet. Die unterschiedliche zeichnerische Darstellung der ersten Abschnitte 65 bis 68 von den zweiten Abschnitten 69 bis 72 deutet die unterschiedliche Ausgestaltung dieser Abschnitte auf dem Bewegungskoordinatengeberelement 60 an. Dabei bilden je ein erster und ein sich daran anschließender zweiter Abschnitt, z.B. 65 und 69, ein Segment dieses Bewegungskoordinatengeberelements 60. Bevorzugt weist jedes der Segmente einen sich über den ersten Abschnitt erstreckenden ersten Bereich mit einer ersten optischen und/oder elektrischen und/oder magnetischen Eigenschaft und einen daran anschließenden, sich über den zweiten Abschnitt erstreckenden zweiten Bereich mit einer zweiten optischen und/oder elektrischen und/oder magnetischen Eigenschaft auf. Die Sensorelemente 61 bis 64 sind dann entsprechend als optische und/oder elektrische und/oder magnetische Sensoren ausgebildet.

Die von den Sensorelementen 61 bis 64 abgegebenen Signale S1 bis S4, die jedes für sich die beiden genannten Signalwerte annehmen können, bilden zusammengenommen das Positionssignal. Dieses wird Eingängen 73, 74, 75 bzw. 76 eines Steuerwerks 77 zugeleitet, an denen die Signale S1 bis S4 als Eingangssignale E1 bis E4 bezeichnet sind. Ein weiteres Eingangssignal E5 des Steuerwerks 77, das diesem an einem Eingang 78 zugeleitet wird, wird aus dem Signal S1 und der invertierten Form des Signals S2 durch eine Verknüpfung in einem UND-Gatter 79 mit anschließender Periodenlängenverdoppelung in einer Kippstufe 80 gewonnen, die durch jede abfallende Flanke des vom UND-Gatter 79 abgegebenen Signals umgeschaltet wird.

Das Steuerwerk umfaßt bevorzugt eine Speicheranordnung, insbesondere einen programmierbaren Lesespeicher (PROM-EPROM o.dgl.), in der zu jedem Wert des Positionssignals und des weiteren Eingangssignals am Eingang 78, d.h. zu jeder Kombination von Signalwerten der Signale E1 bis E5, Schaltinformationen für die Wicklungen 10, 20, 30 des Reluktanzmotors gespeichert sind. Diese als Q1, Q2 bzw. Q3 bezeichneten Signale werden an Ausgängen 81, 82 bzw. 83 des Steuerwerks 77 abgegeben und den Wahlanschlüssen 16, 26 bzw. 36 der in Fig. 2 dargestellten Schaltungsanordnung zugeführt.

Das Steuerwerk 77 enthält weiterhin einen Ausgang 84 für ein Ausgangssignal Q4, das in gleicher Weise wie die Schaltinformationen Q1, Q2, Q3 im Steuerwerk 77 gespeichert ist und das bei der Fortbewegung des Rotors 2 entlang der Bewegungskoordinate w um jeweils eine Längeneinheit in seinem Wert jeweils von einem ersten zu einem zweiten Signalwert oder umgekehrt wechselt. Bei Bewegung des Rotors 2 wird somit ein gleichförmiges Rechtecksignal erzeugt, aus dem in einer Signalformstufe 85 ein analoges, die Bewegungsgeschwindigkeit des Rotors 2 repräsentierendes Geschwindigkeitssignal gewonnen wird. Dazu wird das Signal Q4 einem ersten Eingang 86 eines Exklusiv-ODER-Gatters 87 unmittelbar und einem zweiten Eingang 88 des Gatters 87 über einen RC-Tiefpaß 89 zugeleitet. Am Ausgang 90 des Exklusiv-ODER-Gatters 87 entsteht dadurch eine Impulsfolge der halben Periode des Signals Q4, die mit den abfallenden Flanken ihrer Impulse eine monostabile Kippstufe 91 ansteuert. Das von der monostabilen Kippstufe 91 abgegebene Signal besteht aus Impulsen konstanter Dauer und von der Bewegungsgeschwindigkeit des Rotors 2 abhängigen Abständen, d.h. es weist ein von der Bewegungsgeschwindigkeit abhängiges Tastverhältnis auf. In einem nachgeschalteten Tiefpaßfilter 92 wird daraus der Gleichspannungsanteil extrahiert und an einem Ausgang 93 der Signalformstufe 85 bereitgestellt.

Das Geschwindigkeitssignal vom Ausgang 93 wird einer Subtraktionsstufe 94 zugeführt und dort als Ist-Wert von einem über einen Sollwerteingang 95 zugeführten Geschwindigkeitssollwert subtrahiert. Vom Ausgang 96 der Subtraktionsstufe 94 gelangt die der Drehzahlregelabweichung entsprechende Differenz aus dem Geschwindigkeitssollwert und dem Geschwindigkeitssignal (Ist-Wert) über einen PI-Regler 97 als Stromsollwert an den Stromsollwertanschluß 49, womit die eine Regelanordnung zum Regeln der Bewegungsgeschwindigkeit bildende Schleife geschlossen ist.

Das Geschwindigkeitssignal vom Ausgang 93 wird außerdem zwei Schwellenschaltern 98 bzw. 99 - vorzugsweise Komparatoren oder Schmitt-Trigger - zugeführt, die außerdem von einem Referenzspannungsteiler 100 über dessen Anzapfungen 101, 102 mit Referenzspannungen zur Darstellung von Schaltschwellen beaufschlagt werden. Entsprechend liefert der erste Schwellenschalter 98 über seinen Ausgang 103 bei Geschwindigkeiten oberhalb einer ersten Schaltschwelle ein erstes Geschwindigkeitssignal, das als E7 bezeichnet und dem Steuerwerk 77 an einem Eingang 105 zugeleitet wird, während der zweite Schwellenschalter 99 an seinem Ausgang 104 ein zweites Geschwindigkeitssignal abgibt, wenn das Geschwindigkeitssignal vom Ausgang 93 der Signalformstufe 85 eine zweite Schaltschwelle überschreitet, die höher ist als die erste Schaltschwelle. Dieses zweite Geschwindigkeitssignal wird als Signal E8 einem Eingang 106 des Steuerwerks 77 zugeleitet.

Durch einen Richtungsumschalter 107 wird außerdem ein Richtungssignal E6 gebildet und einem zugehörigen Eingang 108 des Steuerwerks 77 eingespeist.

Mit den Signalen E7 und E8 über die Eingänge 105 und 106 wird dem Steuerwerk 77 im Beispiel nach Fig. 5 das Überschreiten bestimmter Werte der Bewegungsgeschwindigkeit des Rotors 2 eingegeben. Durch die Signale E7, E8 können im Steuerwerk 77 verschiedene Maßnahmen ausgelöst werden, um die Stromeinspeisung in die Wicklungen 10, 20, 30 in verschiedenen Geschwindigkeitsbereichen zu beeinflussen. Dazu können je nach gewünschter Betriebsweise auch mehr oder weniger Schwellenschalter vorgesehen sein. Bei dem dargestellten Beispiel kann vorzugsweise durch das Signal E7 eine Verschiebung zwischen der Position des Rotors 2 und den Anfangs- und Endlagen der Stromimpulse I1, I2, I3 um einen bestimmten Betrag, beispielsweise 15° vorgenommen werden. Durch das Signal E8, d.h. bei Überschreiten der höheren zweiten Schaltschwelle, können dann in der beschriebenen Weise die Stromimpulse ausgeblendet werden und kann gleichzeitig die ebenfalls beschriebene Verlängerung und Verschiebung der Stromimpulse entlang der Bewegungskoordinate w für hohe Drehzahlen vorgenommen werden. Die entsprechend dafür erforderlichen Schaltinformationen Q1 bis Q4 für die unterschiedlichen Kombinationen der Eingangssignale E1 bis E8 sind in der Speicheranordnung im Steuerwerk 77 gespeichert.

Für ein Beispiel einer Betriebsweise der Schaltungsanordnung nach Fig. 5 sind in Fig. 7 die das Positionssignal bildenden Signale S1 bis S4 von den Sensorelementen, die den Eingangssignalen E1 bis E4 des Steuerwerks 77 entsprechen, über der Bewegungskoordinate W für eine vollständige Umdrehung des Rotors 2, d.h. einen vollständigen Durchlauf eines Zyklus entlang der Bewegungskoordinate w, dargestellt. Darunter sind das Ausgangssignal des UND-Gatters 79 sowie das weitere Eingangssignal E5 dargestellt. Die in diesem Diagramm mit Pfeilen markierten Positionen des Rotors 2 entlang der Bewegungskoordinate zeichnen sich dadurch aus, daß bei exakter Positionierung der Sensorelemente 61 bis 64 sowie exakter Ausbildung der Abschnitte 65 bis 72 auf dem Bewegungskoordinatengeberelement 60 je zwei Flanken der Signale S1 bis S4 örtlich zusammenfallen. Durch Toleranzabweichungen können an diesen Stellen jedoch von Fall zu Fall unterschiedliche Kombinationen der Signale S1 bis S4 entsprechend E1 bis E4 auftreten. Diese Kombinationen, als Übergangszustände bezeichnet, werden in einer vorteilhaften Ausgestaltung des in der erfindungsgemäßen Schaltungsanordnung enthaltenen Steuerwerks 77 dadurch berücksichtigt, daß ihnen in der Speicheranordnung definierte Werte für die Signale Q1 bis Q4 zugewiesen werden, die insbesondere den Werten dieser Signale für die entlang der Bewegungskoordinate w benachbarten Werte der Positionssignale entsprechen. Somit wird beim Betrieb des Reluktanzmotors mit der so ausgebildeten Schaltungsanordnung die Kombination der Schaltsignale bzw. Schaltinformationen, die vor Eintreten des Übergangszustandes vorlag oder nach Beendigung des Übergangszustandes eintreten soll, auch auf den Abschnitt des Übergangszustandes ausgedehnt. Dadurch ist selbst bei merkbaren Fertigungstoleranzen des Positionsgebers 59 ein störungsfreier Betrieb möglich.

Ein Beispiel für die Abspeicherung von Schaltinformationen zum Schalten der Wicklungen 10, 20, 30 in der Speicheranordnung für verschiedene Positionssignale einschließlich der Übergangszustände und verschiedene Betriebsfälle ist auszugsweise in der der Beschreibung angehängten Tabelle 1 dargestellt. Dabei sind links spaltenweise die Signale S1 bis S4 der Sensorelemente 61 bis 64 als Auflistung sämtlicher Kombinationsmöglichkeiten des Positionssignals aufgetragen, wobei im ersten Tabellenblock A alle Positionssignale für einen ersten Signalwert Null des weiteren Eingangssignals E5 und im Block B dieselben Werte des Positionssignals für den Fall dargestellt sind, daß das weitere Eingangssignale E5 den zweiten Signalwert 1 annimmt. Entsprechend finden sich in den Blöcken C und D getrennt nach den Werten des Signals E5 die bei entsprechenden Toleranzen möglichen Werte des Positionssignals für die Übergangszustände.

In den Spaltenblöcken rechts neben der Spalte für das Signal E5 sind drei mit 1., 2. und 3. bezeichnete Betriebsfälle aufgetragen, die im Steuerwerk 77 beispielsweise durch die Signale E6 bis E8 vorgegeben werden können. Zu jedem der drei Betriebsfälle 1., 2. und 3. sind die Schaltinformationen Q1 bis Q4 spaltenweise aufgetragen, und in der letzten Spalte der Tabelle 1 finden sich die von den Betriebsfällen unabhängigen Werte des Ausgangssignals Q4 für alle aufgelisteten Werte des Positionssignals und des Eingangssignals E5.

Der mit 1. bezeichnete erste Betriebsfall entspricht der Bewegung des Rotors 2 in einer ersten Richtung bei niedrigen Bewegungsgeschwindigkeiten, wie er auch in Fig. 3 aufgetragen ist. Dabei bedeutet der mit der Ziffer 1 bezeichnete Wert für die Signale Q1 bis Q3, das in der zugehörigen Rotorposition durch die zugeordnete Wicklung 10, 20 bzw. 30 ein Stromimpuls fließen soll, während die Ziffer Null den stromlosen Zustand der zugehörigen Wicklung 10, 20 bzw. 30 bezeichnet.

Der zweite, dargestellte Betriebszustand stellt den Fall einer langsamen Bewegung in entgegengesetzter Richtung dar. Der dritte Betriebszustand gibt den Fall einer schnellen Bewegung des Rotors 2 in gleicher Richtung wie im ersten Betriebszustand wieder. Dies entspricht den in Fig. 4 dargestellten Verläufen der Ströme in den Wicklungen 10, 20 bzw. 30.

Bei der in Fig. 5 dargestellten und durch die Tabelle 1 sowie die übrigen Figuren erläuterten, beispielhaften Ausführung der Erfindung wird die Bewegungsgeschwindigkeit über eine Steuerung der Amplituden der Stromimpulse I1 bis I3 geregelt. Dazu enthält die Schaltungsanordnung nach Fig. 5 zwei verkoppelte Regelschleifen, wobei in einer äußeren Regelschleife über den PI-Regler 97 der Stromsollwert ermittelt und am Stromsollwertanschluß 49 für die in Fig. 2 dargestellte, innere Regelschleife mit dem Stromregler 51 zur Verfügung gestellt wird. Der Stromregler 51 steuert den Stromsteuertransistor 43 im Sinne einer Tastverhältnissteuerung, wodurch sich die sägezahnförmigen Stromverläufe in den Stromimpulsen I1 bis I3 in den Fig. 3 und 4 ergeben.

Die vorstehend beschriebene Anordnung kann mit geringer Abwandlung außer für rotierende Motoren beispielsweise auch für Linearmotoren eingesetzt werden. Bei einem Linearmotor sind die drehsymmetrischen Anordnungen von Rotor und Stator aus Fig. 1 durch lineare Anordnungen ersetzt, die in ihrem Aufbau einer Abwicklung des dargestellten Reluktanzmotors entsprechen, wobei die durch die Abwicklung der auf 360 Winkelgerade verteilten Stator- und Rotoranordnung eine Konfiguration ergibt, die für den Linearmotor einen vollständigen Zyklus entsprechend der vollständigen Statoranordnung bildet. Derartige Zyklen können beim Linearmotor mehrfach hintereinander angeordnet sein. Die Bewegungskoordinate w wird dann im kartesischen Koordinatensystem festgelegt.

Die in Fig. 5 dargestellte Schaltungsanordnung bildet im wesentlichen eine analoge Regelung; die Funktion der Regler, der Signalformstufe für das Geschwindigkeitssignal und der Schwellenschalter können jedoch auch zu einer digitalen Regelung zusammengefaßt werden.

Tabelle 1

| Positionssignal | A | B | C | D |
|---|---|---|---|---|
| Q4 | 1 0 1 0 1 0 | 1 0 1 0 1 0 | 0 1 1 0 | 0 1 1 0 |
| 3. Q3 | 0 0 0 0 0 0 | 0 0 0 1 1 1 | 0 0 0 0 | 1 1 0 1 |
| 3. Q2 | 0 0 1 1 0 0 | 0 1 0 0 0 0 | 0 0 0 0 | 0 0 0 0 |
| 3. Q1 | 1 1 0 0 0 1 | 0 0 0 0 0 0 | 1 0 1 1 | 0 0 0 0 |
| 2. Q3 | 0 1 1 0 0 0 | 0 1 1 0 0 0 | 0 0 0 0 | 0 0 0 0 |
| 2. Q2 | 1 0 0 0 0 1 | 1 0 0 0 0 1 | 1 0 1 1 | 1 0 1 1 |
| 2. Q1 | 0 0 0 1 1 0 | 0 0 0 1 1 0 | 0 1 0 0 | 0 1 0 0 |
| 1. Q3 | 0 0 0 0 1 1 | 0 0 0 0 1 1 | 1 1 0 1 | 1 1 0 1 |
| 1. Q2 | 0 0 1 1 0 0 | 0 0 1 1 0 0 | 0 0 0 0 | 0 0 0 0 |
| 1. Q1 | 1 1 0 0 0 0 | 1 1 0 0 0 0 | 0 0 1 0 | 0 0 1 0 |
| E5 | 0 0 0 0 0 0 | 1 1 1 1 1 1 | 0 0 0 0 | 1 1 1 1 |
| S4 | 0 0 0 1 1 0 | 0 0 0 1 1 0 | 0 0 0 1 | 0 0 0 1 |
| S3 | 0 0 0 0 1 1 | 0 0 0 0 1 1 | 0 1 1 1 | 0 1 1 1 |
| S2 | 1 0 0 0 0 1 | 1 0 0 0 0 1 | 1 0 1 1 | 1 0 1 1 |
| S1 | 1 1 0 0 0 0 | 1 1 0 0 0 0 | 0 0 1 0 | 0 0 1 0 |

## Patentansprüche

1. Schaltungsanordnung zum Kommutieren eines Reluktanzmotors mit einem Stator (1), der in einer ersten zyklischen Anordnung entlang einer Bewegungskoordinate (w) für einen gegenüber dem Stator (1) bewegbaren Rotor (2) mit einer Anzahl Wicklungen (10, 20, 30) versehen ist, in die in entsprechen-

10

dem Zyklus in Abhängigkeit von Stellung und Bewegungsgeschwindigkeit des Rotors (2) Stromimpulse (I1, I2, I3) von bezüglich der Bewegungskoordinate (w) des Rotors (2) vorgebbarer Länge und Lage einspeisbar sind,
dadurch gekennzeichnet, daß bei Bewegungsgeschwindigkeiten oberhalb eines vorgebbaren Wertes nach jedem eingespeisten Stromimpuls (I1 bzw. I2 bzw. I3) wenigstens der in der für niedrige Bewegungsgeschwindigkeiten vorgegebenen zyklischen Folge sich anschließende Stromimpuls (I2 bzw. I3 bzw. I1) ausgelassen wird.

2. Schaltungsanordnung nach Anspruch 1,
dadurch gekennzeichnet, daß aus der zyklischen Reihenfolge der bei niedriger Bewegungsgeschwindigkeit einzuspeisenden Stromimpulse (I1, I2, I3) jeder zweite Impuls ausgelassen wird.

3. Schaltungsanordnung nach Anspruch 1 oder 2,
dadurch gekennzeichnet, daß die eingespeisten Stromimpulse (I1 bzw. I2 bzw. I3) oberhalb des vorgebbaren Wertes der Bewegungsgeschwindigkeit um einen vorgebbaren Betrag bezüglich der Bewegungskoordinate (w) des Rotors (2) verlängert werden und daß ihre Endlagen bezüglich der Bewegungskoordinate (w) unverändert bleiben.

4. Schaltungsanordnung nach Anspruch 1, 2 oder 3 zum Speisen des Reluktanzmotors aus einer Gleichspannungsquelle (57),
gekennzeichnet durch je eine asymmetrische H-Schaltung für jede Wicklung (10, 20, 30) des Reluktanzmotors mit einem allen H-Schaltungen gemeinsamen ersten (43, 44) und je H-Schaltung einem zweiten zwischen Anschlüssen (40, 41) der Gleichspannungsquelle (57) angeordneten Längszweig (12, 13; 22, 23; 32, 33) aus je einem Schaltelement (43; 12; 22; 32) und einem dazu in Reihe angeordneten, in bezug auf die Gleichspannungsquelle (57) in Sperrichtung gepolten Gleichrichterelement (13; 23; 33; 44), wobei in jeder H-Schaltung das Schaltelement (43; 12; 22; 32) des einen und das Gleichrichterelement (13; 23; 33; 44) je des anderen Längszweiges einseitig mit demselben Anschluß (40 bzw. 41) der Gleichspannungsquelle (57) verbunden sind und die zugehörige Wicklung (10 bzw. 20 bzw. 30) im Querzweig der H-Schaltung zwischen den Verbindungspunkten (46; 14; 24; 34) der Schaltelemente (43; 12; 22; 32) und der Gleichrichterelemente (13; 23; 33; 44) jedes Längszweiges angeordnet ist.

5. Schaltungsanordnung nach Anspruch 4,
dadurch gekennzeichnet, daß die zweiten Längszweige (12, 13; 22, 23; 32, 33) von den zugehörigen Schaltelementen (43; 12; 22; 32) über ein gemeinsames Meßelement (45) an den zugehörigen Anschluß (41) der Gleichspannungsquelle (57) geführt sind.

6. Schaltungsanordnung nach einem der Ansprüche 1 bis 5,
gekennzeichnet durch einen Positionsgeber (59) zum Liefern eines die Stellung des Rotors (2) entlang der Bewegungskoordinate (w) repräsentierenden Positionssignals.

7. Schaltungsanordnung nach Anspruch 6,
dadurch gekennzeichnet, daß aus den zeitlichen Änderungen des Positionssignals ein die Bewegungsgeschwindigkeit des Rotors (2) repräsentierendes Geschwindigkeitssignal abgeleitet wird.

8. Schaltungsanordnung nach Anspruch 6 oder 7,
dadurch gekennzeichnet, daß der Rotor (2) in einer zweiten zyklischen Anordnung unterteilt ist, daß der Positionsgeber (59) ein mit dem Rotor (2) verbundenes, mit der zweiten zyklischen Anordnung übereinstimmend segmentiertes Bewegungskoordinatengeberelement (60) und dazu eine Anzahl von Sensorelementen (61 bis 64) aufweist, wobei diese Anzahl der zweiten zyklischen Anordnung entspricht und die Sensorelemente (61 bis 64) längs der Bewegungskoordinate (w) des Rotors (2) gegenseitig voneinander um eine Längeneinheit beabstandet sind, die einen durch das kleinste gemeinsame Vielfache der ersten und zweiten zyklischen Anordnung bestimmten Teil eines vollständigen Zyklus der Statoranordnung bildet, und daß das Bewegungskoordinatengeberelement (60) zyklisch derart ausgestaltet ist, daß es jedes der Sensorelemente (61 bis 64) über einen ersten Abschnitt (65 bis 68) von je zwei Längeneinheiten zur Abgabe eines ersten Signalwertes und über einen daran anschließenden zweiten Abschnitt (69 bis 72) von je vier Längeneinheiten zur Abgabe eines zweiten Signalwertes veranlaßt.

9.  Schaltungsanordnung nach Anspruch 8,
    dadurch gekennzeichnet, daß das Bewegungskoordinatengeberelement (60) in jedem seiner Segmente (65, 69; 66, 70; 67, 71; 68, 72) einen sich über den ersten Abschnitt (65; 66; 67; 68) erstreckenden ersten Bereich mit einer ersten optischen und/oder elektrischen und/oder magnetischen Eigenschaft und einen daran anschließenden, sich über den zweiten Abschnitt (69; 70; 71; 72) erstreckenden zweiten Bereich mit einer zweiten optischen und/oder elektrischen und/oder magnetischen Eigenschaft aufweist und daß die Sensorelemente (61 bis 64) als optische und/oder elektrische und/oder magnetische Sensoren ausgebildet sind.

10. Schaltungsanordnung nach Anspruch 6, 7, 8 oder 9,
    gekennzeichnet durch ein Steuerwerk (77), dem das Positionssignal sowie das Geschwindigkeitssignal zugeleitet werden und durch das danach die Stromimpulse (I1, I2, I3) in den Wicklungen (10, 20, 30) geschaltet werden.

11. Schaltungsanordnung nach Anspruch 10,
    dadurch gekennzeichnet, daß das Steuerwerk (77) eine Speicheranordnung umfaßt, in der zu jedem Wert des Positionssignals und des Geschwindigkeitssignals Schaltinformationen (Q1, Q2, Q3) für die Wicklungen (10, 20, 30) gespeichert sind.

12. Schaltungsanordnung nach einem der vorhergehenden Ansprüche,
    gekennzeichnet durch eine Regelanordnung zum Regeln der Bewegungsgeschwindigkeit.

13. Schaltungsanordnung nach Anspruch 12,
    dadurch gekennzeichnet, daß die Bewegungsgeschwindigkeit über eine Steuerung der Amplituden der Stromimpulse (I1, I2, I3) geregelt wird.

14. Positionsgeber (59) gemäß Anspruch 6, 7, 8 oder 9 zur Verwendung in einer Schaltungsanordnung nach Anspruch 1 bis 5 oder 10 bis 13.

FIG.1

FIG.2

FIG.3

FIG.4

FIG.5

FIG.6

FIG.7